# EUROPEAN PATENT APPLICATION

(11) **EP 4 417 797 A1**
(43) Date of publication of application: **21.08.2024**
(21) Application number: 23193724.4
(22) Date of filing: 28.08.2023
(51) Int. Cl.: F02C 7/22, F02C 7/228, F02C 7/232, F02C 9/26, F23R 3/34, F02M 45/08, F02M 47/02, F02M 63/00, F02C 7/224, F23D 11/26

(54) **PROPORTIONAL CONTROL OF COOLING CIRCUIT OF FUEL NOZZLE**

(30) Priority: 14.02.2023 US 202318109555; 21.07.2023 US 202318224920
(71) Applicant: Collins Engine Nozzles, Inc., West Des Moines, IA 50265 (US)
(72) Inventor: WILLIAMS, Brandon, Johnston, IA 50131 (US); RYON, Jason A, Carlisle, IA 50047 (US); SEEI, Roger A, West Dead Moines, IA 50265 (US); FERRAROTTI, Michael, Durham, CT 06422 (US); LOKHANDWALLA, Murtuza, South Windsor, CT 06074 (US); HAUGSJAAHABINK, Todd, Amherst, MA 01002 (US); ROURKE, Rusell P Jr., East Granby, CT 06026 (US); KOKAS, Jay W, Bloomfield, CT 06002 (US); VERSAILLES, Richard E, New Hartford, CT 06057 (US)
(74) Representative: Dehns

(57) **Abstract**

A system includes an injector (102) including a scheduling valve assembly (104) and a nozzle (106) in fluid communication with the scheduling valve assembly. The injector includes two fluid circuits, a primary circuit (110) and a secondary circuit (112), between the inlet of the injector and two respective outlets for staged flow output. A cooling circuit (113) is in fluid communication with the inlet of the injector. The cooling circuit is in thermal communication with the secondary circuit for selectively cooling the secondary circuit at low flow and no flow conditions of the secondary circuit. A separate valve (114, 214) is connected in fluid communication in the cooling circuit for controlling flow through the cooling circuit. The separate valve is configured for active control regardless of pressure at the inlet of the injector. The scheduling valve assembly is configured for passive control of the primary and secondary circuits based on pressure at the inlet of the injector.

## Description

### BACKGROUND

### 1. Field

The present disclosure relates to injectors and nozzles, and more particularly to fuel injection such as in gas turbine engines.

### 2. Description of Related Art

Typical fuel injectors that contain flow scheduling valves are passive, where the flow response is fully based on the input pressure. A resistive spring provides the force balance to limit the rate at which the schedule valve opens. These valves can be used to divide flow as well, providing multiple flow paths that can be sequenced/schedule based on inlet fuel pressure, valve open area, and any downstream flow devices such as atomizers.

At relatively low flow conditions, the flow schedule valve is largely responsible for most of the metering and therefore consumes and/or requires the majority of the fuel pressure. At relatively high flow conditions, there is a transition of pressure drop from the valve to other components downstream of the valve.

There are occasions in higher performance combustors where a cooling flow circuit may be required for portions of the flight cycle where certain fuel circuits may be significantly reduced or shut off in flow. The cooling circuit acts to cool by thermal conduction of those circuits.

The conventional techniques have been considered satisfactory for their intended purpose. However, there is an ever present need for improved systems and methods for adjusting cooling flow in passive injection valves. This disclosure provides a solution for this need.

### SUMMARY

A system includes an injector including a scheduling valve assembly and a nozzle in fluid communication with the scheduling valve assembly. The scheduling valve assembly is configured for regulation of flow from an inlet of the injector to the nozzle. The injector includes two fluid circuits between the inlet of the injector and two respective outlets for staged flow output. A first one of the two fluid circuits is a primary circuit, and a second one of the two fluid circuits is a secondary circuit. A cooling circuit is in fluid communication with the inlet of the injector. The cooling circuit is in thermal communication with the secondary circuit for selectively cooling the secondary circuit at low flow and no flow conditions of the secondary circuit. A separate valve is connected in fluid communication in the cooling circuit for controlling flow through the cooling circuit. The separate valve is configured for active control regardless of pressure at the inlet of the injector. The scheduling valve assembly is configured for passive control of the primary and secondary circuits based on pressure at the inlet of the injector.

The separate valve can be a discrete open/closed valve. It is also contemplated that the separate valve can be a proportional valve with intermediate conditions between fully open and fully closed. The proportional valve can include a proportional solenoid, a stepper motor, or a torque motor based servo valve with flapper and nozzle.

A valve spool of the scheduling valve assembly can be biased to a closed position by one or more biasing members of the scheduling valve assembly. The valve spool can be configured to regulate flow from the inlet of the injector to each of the primary and secondary circuits. The valve spool can include a scheduling surface configured to vary flow area through the secondary circuit based on position of the valve spool within the scheduling valve assembly.

The separate valve can be a solenoid valve that has an inlet, an outlet, and a solenoid valve member configured to control flow through the solenoid valve from the inlet to the outlet based on electrical power applied to an armature of the solenoid valve. The inlet of the solenoid valve can be connected in fluid communication with the inlet of the injector. The outlet of the solenoid valve can be connected in fluid communication with the cooling circuit. The outlet of the solenoid valve can connect to the cooling circuit. The cooling circuit can be in thermal communication with the secondary circuit. The cooling circuit can be connected in fluid communication to empty into the primary circuit at a position in the primary circuit that is downstream of the scheduling valve assembly.

The solenoid valve can be a binary valve configured for binary operation either allowing or disallowing flow through the cooling circuit without an intermediate flow condition between allowing or disallowing flow. The solenoid valve can be a modulating valve configured to vary flow between fully allowing and fully disallowing flow through the cooling circuit with intermediate flow conditions between allowing and disallowing flow.

A check valve can be in fluid communication upstream of where the primary, secondary, and cooling circuits connect to the inlet of the injector. A pressure matching orifice can be included in the primary circuit downstream of the inlet of the injector and upstream of a point where the cooling circuit empties into the primary circuit. Loss of electrical power to the separate valve need not prevent the valve spool positioning itself at a position determined by mechanical components and regulating fuel flow as per a scheduling surface.
The injector can be a first injector in a plurality of injectors each connected in fluid communication with a single manifold for supplying fuel to each injector in the plurality of injectors including the primary, secondary, and cooling circuits of the first injector. The cooling circuit can empty into another injector in the plurality of injectors different from the first injector for issuance into a combustor. The secondary circuit can outlet to a spray outlet of the first injector. The secondary circuit can outlet to a spray outlet of another injector in the plurality of injectors different from the first injector. Each injector in the plurality of injectors can be as described above including a respective separate valve as described above connected thereto. A controller can be electrically connected to the separate valves for individual and/or ganged control thereof. The respective separate valve can be a proportional valve with intermediate conditions between fully open and fully closed. Each of the injectors in the plurality of fuel injectors can include a mass flow sensor, pressure sensor, temperature sensor, and/or velocity sensor operatively connected to the controller to provide mass flow feedback to the controller.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic cross-sectional perspective view of a portion an embodiment of a system constructed in accordance with the present disclosure, showing the passive hydromechanical valve spool with flow through a primary circuit only;
Fig. 2 is a schematic cross-sectional perspective view of the portion of the system of Fig. 1, showing the passive valve spool positioned with flow through both a primary circuit and through a secondary circuit;
Fig. 3 is a schematic perspective view of the system of Fig. 1, showing the nozzle of the injector;
Fig. 4 is a schematic view of the system of Fig. 1, showing flow for the primary and secondary fluid circuits, where the cooling circuit empties into the primary circuit;
Fig. 5 is a schematic view of the system of Fig. 1, showing flow for the primary and secondary fluid circuits, where the cooling circuit empties into an auxiliary nozzle, e.g. on another injector;
Fig. 6 is a schematic view of the system of Fig. 1, showing a plurality of injectors such as in Figs. 1-4;
Fig. 7 is a schematic diagram of a valve arrangement of Fig. 4, showing a proportional valve in the primary fuel circuit; and
Fig. 8 is a schematic diagram of a valve arrangement of Fig. 5, showing a proportional valve in the primary fuel circuit.

### DETAILED DESCRIPTION OF THE PREFERRED EMBODIMENTS

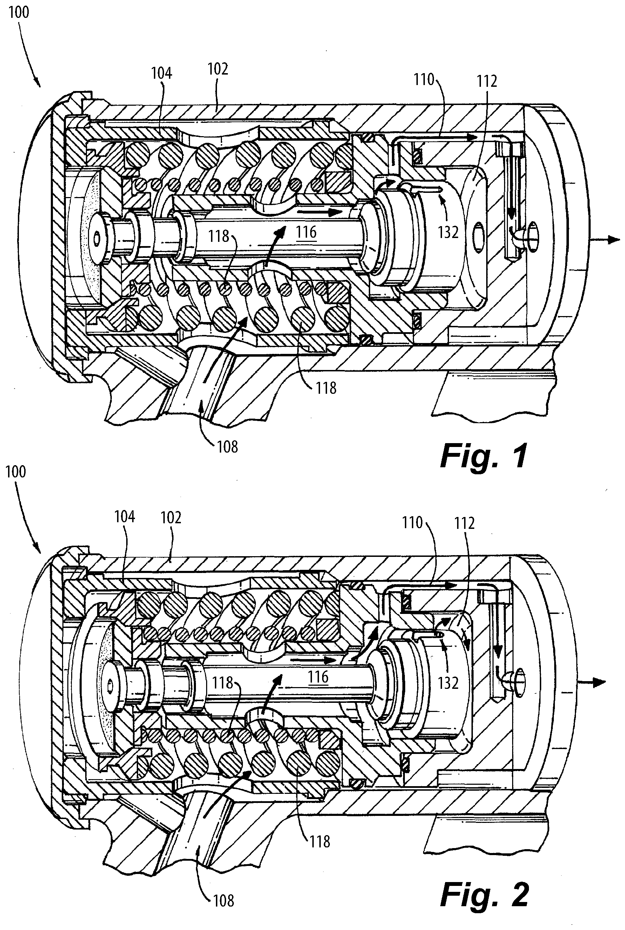

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments of systems in accordance with the disclosure, or aspects thereof, are provided in Figs. 2-8, as will be described. The systems and methods described herein can be used to provide actively controlled cooling in fuel injectors for gas turbine engines, e.g. wherein the fuel injection is passively controlled based on input pressure.

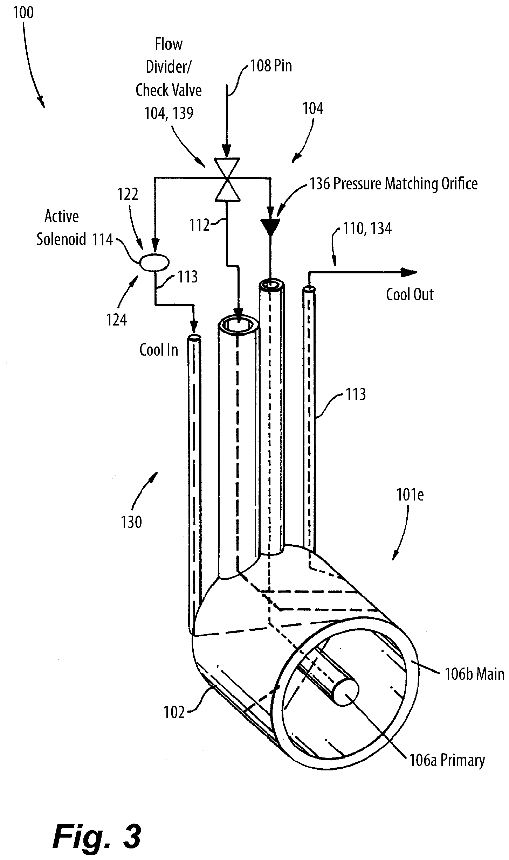

The system 100 includes an injector 102 having a scheduling valve assembly 104 and a nozzle 106 (labeled in Fig. 3) in fluid communication with the valve assembly 104. The scheduling valve assembly 104 is configured for regulation of flow from an inlet 108 of the injector 102 to the nozzle 106 (labeled in Fig. 3). The injector 102 includes two fluid circuits 110, 112 between the inlet 108 of the injector and two respective outlets 106a, 106b of the nozzle 106 for staged flow output from the nozzle 106 (labeled in Fig. 3). A first one of the two fluid circuits 110, 112 is a primary circuit 110, and a second one of the two fluid circuits 110, 112 is a secondary, or main, circuit 112.

A cooling circuit 113 is in fluid communication with the inlet 108 of the injector. The cooling circuit 113 is in thermal communication with the secondary circuit 112 for selectively cooling the secondary circuit 112 at low flow and no flow conditions of the secondary circuit 112. A separate valve 114 is connected in fluid communication in the cooling circuit 113 for controlling flow through the cooling circuit 113. The separate valve 114 is configured for active control regardless of pressure at the inlet 108 of the injector 102. The scheduling valve assembly 104 is configured for passive control of the primary and secondary circuits 110, 112 based on pressure at the inlet 108 of the injector 102.

With continued reference to Fig. 1, the valve spool 116 of the scheduling valve assembly 104 is biased to a closed position, i.e. it is biased to the right as oriented in Figs. 1 and 2, by one or more biasing members 118 of the scheduling valve assembly 104. The valve spool 116 is configured to regulate flow from the inlet 108 of the injector 102 to each of the primary and secondary circuits 110, 112. The valve spool 116 includes a scheduling surface 132 configured to vary flow area through the secondary circuit 112 based on position of the valve spool 116 within the scheduling valve assembly 104, i.e. as the valve spool 116 moves back and forth in the horizontal direction as oriented in Figs. 1 and 2. Fig. 1 shows the valve spool 116 in a position allowing flow only through the primary circuit 110, and Fig. 2 shows the valve spool 116 in a position further to the right as oriented in Figs. 1 and 2, allowing flow through both the primary and secondary circuits 110, 112. A scheduling valve with a scheduling surface 132 is described in U.S. Patent No. 5,732,730.

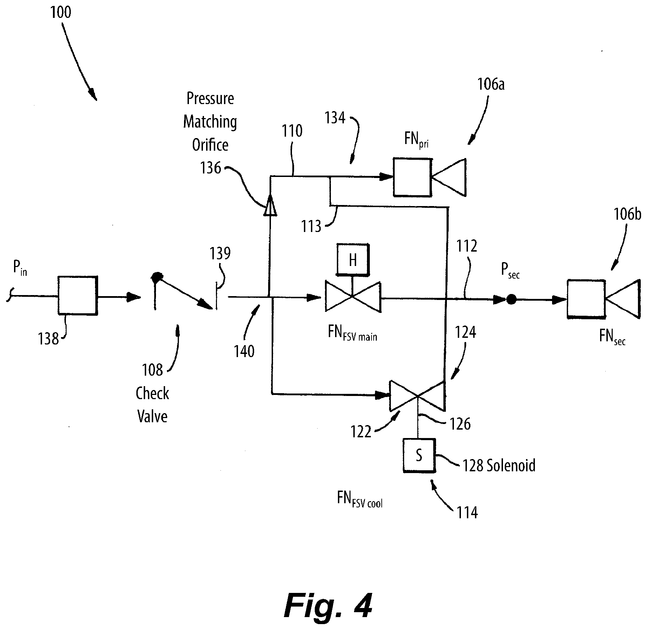

With reference now to Fig. 3, the separate valve 114 is a solenoid valve. The solenoid valve 114 has an inlet 122, an outlet 124, and a solenoid valve member 126 (schematically labeled in Fig. 4) configured to control flow through the solenoid valve 114 from the inlet 122 to the outlet 124 based on electrical power applied to an electromagnetic coil 128 (schematically labeled in Fig. 4) to apply a force on an armature of the solenoid valve 114 that drives the valve member 126. The inlet 122 of the solenoid valve 114 is connected in fluid communication with the inlet 108 of the injector 102. The outlet 124 of the solenoid valve 114 is connected in fluid communication with the cooling circuit 113, upstream of where the cooling circuit 113 is in thermal communication with the secondary circuit 112, e.g. in the body of the nozzle 106 and/or feed arm 130 of the injector 102. for preventing formation of coke deposits in the secondary circuit 112 when the secondary (main) circuit 112 is at low- or no-flow. The cooling circuit 113 is connected in fluid communication to empty into the primary circuit 110 at a position 134 in the primary circuit 110 that is downstream of the scheduling valve assembly 104, for issuance from the nozzle 106a (labeled in Fig. 4) together with the other flow from the primary circuit 110. As shown schematically in Figs. 3 and 4, a pressure matching orifice 136 is in the primary circuit downstream of the inlet 108 of the injector 102 and upstream of the position 134 where the cooling circuit 113 empties into the primary circuit 110 to make sure flow from the cooling circuit 113 is accepted into the primary circuit 110.

The solenoid valve 114 is a binary valve configured for binary operation either allowing or disallowing flow through the cooling circuit 113 without an intermediate flow condition between allowing or disallowing flow. It is also contemplated that the solenoid valve 114 can be a modulating valve configured to vary flow between fully allowing and fully disallowing flow through the cooling circuit 113 with intermediate flow conditions between allowing and disallowing flow. For example, the solenoid valve 114 can operate exclusively between restricted flow and fully open flow for the cooling circuit 113. Any other suitable type of valve can be used such as a motorized valve, e.g. separate from the scheduling valve.

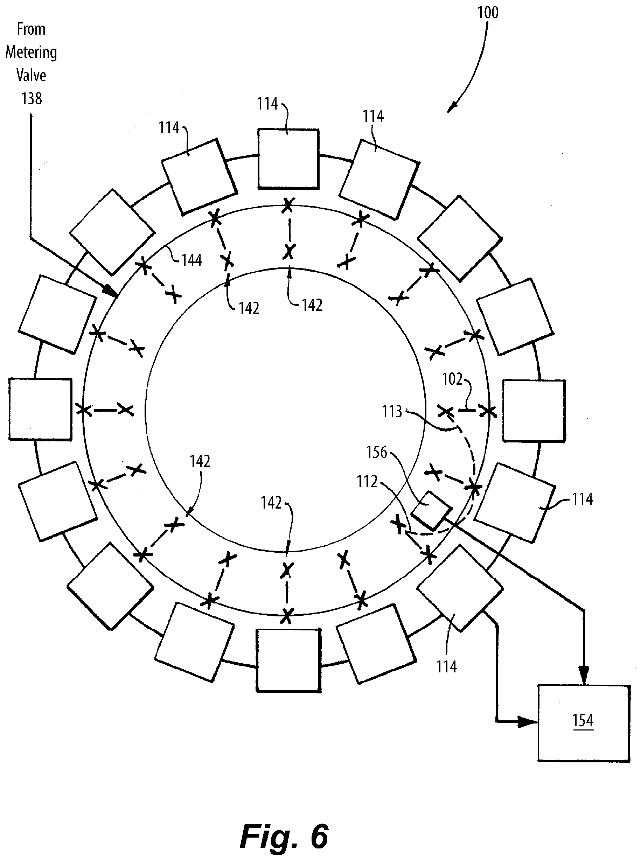

With reference now to Fig. 4, the injector 102 is shown schematically. Fuel supplied from a manifold at Pᵢₙ to the inlet 108 can be regulated with a metering valve 138. One or more check valves 139, or flow dividers, can be included upstream or downstream of the metering valve 138 to prevent leaking through the injector 102 when there is supposed to be no flow through the injector 102. The check valve 139 is in fluid communication with the inlet 108 at a position 140 upstream of where the primary, secondary, and cooling circuits 110, 112, 116 connect to the inlet 108 of the injector 102. The check valve 139 can be per injector 102, or one shared check valve 139 can be used for multiple injectors 102, e.g. in systems with multiple injectors as shown in Fig. 6. Just downstream of the check valve 139, flow can go three ways: through the cooling circuit 113, through a main fuel circuit (or secondary circuit 112), or through the primary fuel circuit 110.

Fig. 4 shows the fluid circuits 110, 112, 116 and how the valve assembly 104 and solenoid valve 114 connect to the fluid circuits 110, 112, 116. By using electrical control of the solenoid valve 114 to regulate how much flow passes through the solenoid valve 114, the flow from the solenoid valve 114 into the cooling circuit circuit 116 bypassing the valve assembly 104 can be used to provide cooling for the secondary circuit 112, e.g. when the secondary circuit is at low-flow or no-flow conditions. This gives fine, active control over the cooling flow. Moreover, the valve spool 116 (labeled in Figs. 1 and 2) passively positions itself within the valve assembly 104 (labeled in Figs. 1 and 2) based on the pressure at the inlet 108 of the injector 102, Pᵢₙ. In the event of electrical power outage for the solenoid valve 114, there is no interference with the ordinary, passive operation of the valve spool 116 of Fig. 1, i.e. loss of electrical power to the separate valve 114 does not prevent the valve spool to just positioning itself at the position determined by mechanical components and the valve assembly 104 can continue to regulate fuel flow as per a scheduling surface.

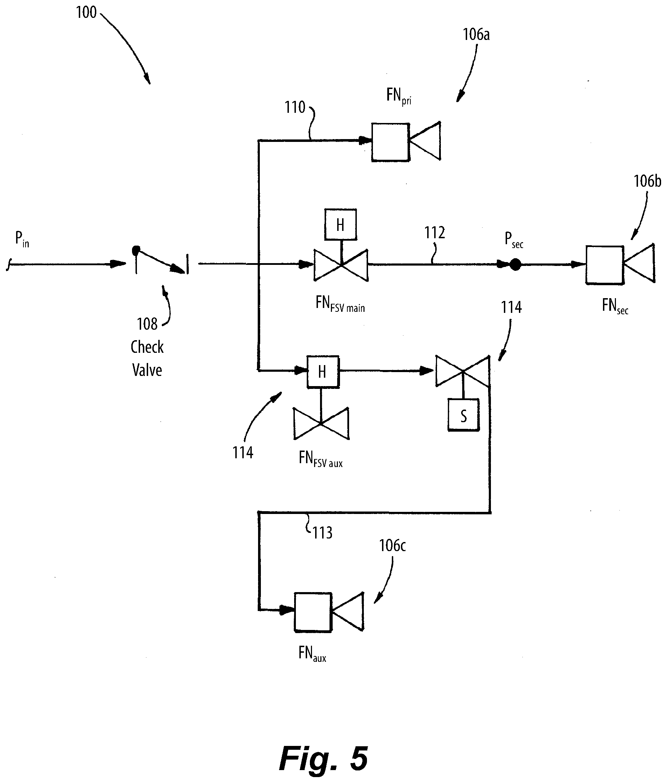

With reference now to Fig. 5, another configuration of the fluid circuits 110, 112, 115 is shown. Rather than emptying into the primary circuit 110 for issuance of its fuel flow into a combustor as described above with reference to Figs. 1-4, in Fig. 5 the cooling circuit 113 instead issues into an auxiliary nozzle 106c. This can be an additional nozzle outlet on the nozzle 106, which is labeled in Fig. 3, or it can be an outlet of a nozzle of a neighboring injector 142 in a system of injectors such as described below with reference to Fig. 6.

With reference now to Fig. 6, the injector 102 is a first injector in a plurality of injectors 142 each connected in fluid communication with a single manifold 144 for supplying fuel to each injector 102, 142 in the plurality of injectors including the primary, secondary, and cooling circuits 110, 112, 116 of the first injector 102. The cooling circuit 113 empties either into the primary circuit 110 of the injector 102 as described above with reference to Fig. 4, or it can empty into another injector 142 in the plurality of injectors different from the first injector 102 for issuance into a combustor, as indicated by the dashed line numbered 116 in Fig. 6. Similarly, the secondary circuit 112 can outlets to a spray outlet of the first injector 100 as described above with reference to Figs. 1-4, or the secondary circuit 112 can outlets to a spray outlet of another injector 142 in the plurality of injectors different from the first injector 102, as indicated by the dashed line numbered 112 in Fig. 6. Each injector 102, 142 can be as described above including a respective separate valve 114 as described above connected thereto.

A controller 154 is electrically connected to the solenoid valves 114 for individual control thereof (in Fig. 6, only one solenoid valve 114 is shown connected to the controller 154 for sake of clarity in the drawing). It is also contemplated that the controller 154 can instead be electrically connected to the solenoid valves 114 for ganged control thereof, i.e. where all the valves 114 receive the same command from the controller 154.

Those skilled in the art will readily appreciate that this circumferential arrangement can be modified as needed for a given engine application, that control of the injectors 102 as described herein allows for finely tuned control of fuel circuit cooling and that the solenoid controlled and passive injectors described here are an example and this disclosure applies to any other suitable combination of passive / active injectors. The control can be based on sensor feedback from one or more sensors 156 in the system 100.

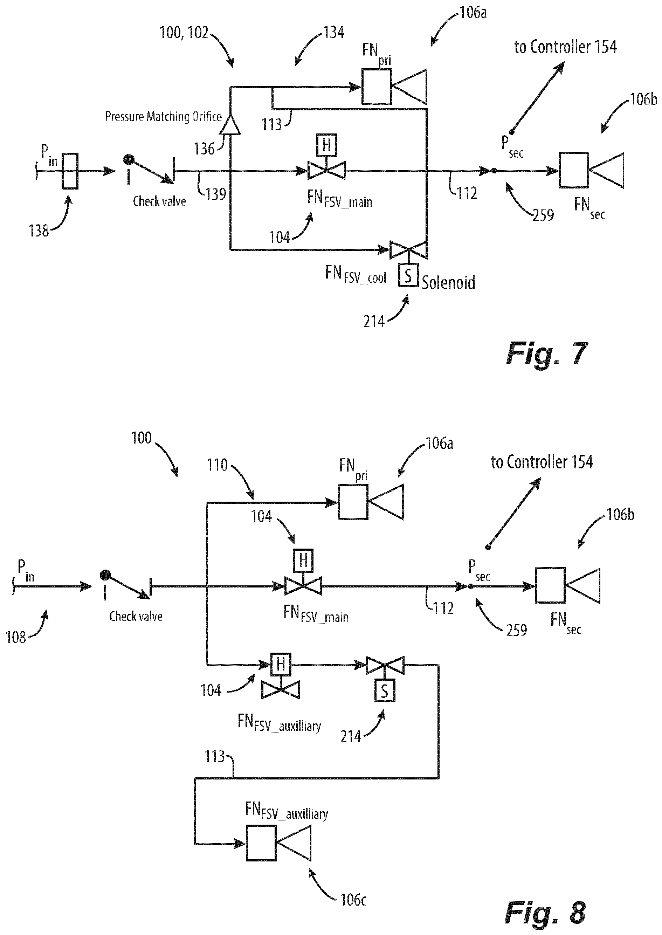

With reference now to Figs. 7 and 8, the solenoid valve 114 described above with reference to Figs. 4 and 5 is a discrete open/closed valve or a discrete partially open to closed valve, or a discrete partially open to open valve, even if a modulating type valve is used. However it is also contemplated that it can instead be a proportional valve 214, with intermediate conditions between fully open and fully closed. The proportional valve 214 includes a proportional solenoid or a stepper motor. If a stepper motor is used, multiple discrete steps can be used between fully open and fully closed. The check/metering valve or valves 138, 139 is/are upstream of the branch between the lines to the to the valve assembly 104 and to the proportional valve 214. The scheduling valve assembly 104 is in the fluid circuit 112 (and 113 in Fig. 8) for control of flow through the fluid circuits 112, 113. Proportionally controlling the separate valve 214 between fully opened and fully closed states allows for intermediate flow states for fine tuning as needed to combustion conditions.

With continued reference to Figs. 6-8, each of the injectors 102/142 can include a mass flow sensor 259 embedded in contact with fuel passing through the injector 102/152 operatively connected to the controller 154 to provide mass flow feedback to the controller 154. Sensor 259 can be a mass flow sensor, pressure sensor, temperature sensor, and/or velocity sensor. The sensor signals can be used to control actuators of the electrically-controlled valves 214 to gain more / less uniformity as desired during operation. The sensor 259 can include several devices in isolation or combination, such as a hot wire anemometer, a pitot tube, an ultrasonic transducer, an NIST (National Institute of Standards and Technology) type calibration orifice, a thermocouple, a pressure transducer, a turbine wheel, a Coriolis meter, a chemiluminescence sensor for sensing a signal from flame, or any other suitable type of sensor. The sensor 259 can be located as shown in Fig. 7-8, which can be particularly useful for monitoring temperature or fouling of the secondary circuit 112. It is also contemplate that sensors can be used in any of the branches of flow, or upstream of the branches, e.g. to sense total flow through the injector from the inlet at Pᵢₙ. For example, a sensor can be included in the primary circuit 110 to monitor the quality/temperature of that circuit, and the same for the auxiliary circuit 113.

Systems and methods as disclosed herein provide potential benefits as explained below. Systems and methods as disclosed herein are fail-safe since failure of the solenoid results in the injector simply reverting to state of art function. Systems and methods as disclosed herein can provide independent control of auxiliary circuits (e.g. to nozzle 106c as shown in Fig. 5) to mitigate acoustics, emissions or flame out. Multiple valves 114 can work as a system as shown in Fig. 6. If one valve is set to reduce flow, others can be opened to increase flow to compensate. Systems and methods as disclose herein allow incorporation of mass-flow sensors, pressure sensor(s), and/or position sensors (e.g. as sensor 156 in Fig. 6), which allows for health monitoring, and active flow control. Valves 114 can be gradually actuated to minimize potential pressure spikes within the fuel system. Systems and methods as disclosed herein can eliminate the state of art flow divider valves and manifold associated with primary / secondary injector systems. Cooling flow can be adjusted based on flight cycle and level of cooling that is required to ensure stagnant or low flow fuel circuits stay below coking limits. With systems and methods as disclosed herein, failure of the electrically-controlled valve 114/214 results in limited flow to the cooling circuit, not total loss of the cooling circuit. Systems and methods as disclosed herein can allow for independent control of the cooling circuit to mitigate acoustics, emissions or flame out. Multiple valves can work together as a system, e.g. if one valve is set to reduce flow, others can be opened to increase flow to compensate as the system adapts to stabilize conditions in the combustor. Incorporation of mass-flow sensor, pressure sensor(s), and/or position sensor allows for health monitoring, and for active flow control. Proportional control allows for valves to be gradually actuated to minimize potential pressure spikes within the fuel system. Tailoring flow proportionally between full state switch can improve operability of the engine, including ignition, pull away, and noise mitigations. Systems and methods as disclosed herein can eliminates the more traditional flow divider valves and manifold associated with primary / secondary injector systems. Cooling flow can be adjusted based on flight cycle and level of cooling that is required to ensure stagnant or low flow fuel circuits stay below coking limits.

The methods and systems of the present disclosure, as described above and shown in the drawings, provide for adjustment of otherwise passive valves, e.g. to provide actively controlled cooling in fuel injectors for gas turbine engines, e.g. wherein the fuel injection is passively controlled based on input pressure. While the apparatus and methods of the subject disclosure have been shown and described with reference to preferred embodiments, those skilled in the art will readily appreciate that changes and/or modifications may be made thereto without departing from the scope of the invention as defined by the claims.

## Claims

1. A system comprising:
an injector (102) including a scheduling valve assembly (104) and a nozzle (106) in fluid communication with the scheduling valve assembly, wherein the scheduling valve assembly is configured for regulation of flow from an inlet (108) of the injector to the nozzle, wherein the injector includes two fluid circuits (110, 112) between the inlet of the injector and two respective outlets for staged flow output, wherein a first one of the two fluid circuits is a primary circuit (110), and wherein a second one of the two fluid circuits is a secondary circuit (112);
a cooling circuit (113) in fluid communication with the inlet of the injector, wherein the cooling circuit is in thermal communication with the secondary circuit for selectively cooling the secondary circuit at low flow and no flow conditions of the secondary circuit; and
a separate valve (114) connected in fluid communication in the cooling circuit for controlling flow through the cooling circuit, wherein the separate valve is configured for active control regardless of pressure at the inlet of the injector, and wherein the scheduling valve assembly is configured for passive control of the primary and secondary circuits based on pressure at the inlet of the injector.

2. The system as recited claim 1, wherein the separate valve is a discrete open/closed valve., or wherein the separate valve is a proportional valve (214) with intermediate conditions between fully open and fully closed, and optionally wherein the proportional valve includes a proportional solenoid, a stepper motor, or a torque motor based servo valve with flapper and nozzle.

3. The system as recited in claim 1 or 2, wherein a valve spool (116) of the scheduling valve assembly is biased to a closed position by one or more biasing members (118) of the scheduling valve assembly, wherein the valve spool is configured to regulate flow from the inlet (108) of the injector to each of the primary and secondary circuits, and wherein the valve spool includes a scheduling surface configured to vary flow area through the secondary circuit based on position of the valve spool within the scheduling valve assembly.

4. The system as recited in claim 3, wherein the separate valve is a solenoid valve that has an inlet, an outlet, and a solenoid valve member configured to control flow through the solenoid valve from the inlet to the outlet based on electrical power applied to an armature of the solenoid valve.

5. The system as recited in claim 4, wherein the inlet of the solenoid valve is connected in fluid communication with the inlet of the injector, and wherein the outlet of the solenoid valve is connected in fluid communication with the cooling circuit, wherein the outlet of the solenoid valve connects to the cooling circuit, wherein the cooling circuit is in thermal communication with the secondary circuit, and wherein the cooling circuit is connected in fluid communication to empty into the primary circuit at a position in the primary circuit that is downstream of the scheduling valve assembly.

6. The system as recited in claim 4, wherein the solenoid valve is a binary valve configured for binary operation either allowing or disallowing flow through the cooling circuit without an intermediate flow condition between allowing or disallowing flow, or wherein the solenoid valve is a modulating valve configured to vary flow between fully allowing and fully disallowing flow through the cooling circuit with intermediate flow conditions between allowing and disallowing flow.

7. The system as recited in any preceding claim, further comprising a check valve (139) in fluid communication upstream of where the primary, secondary, and cooling circuits connect to the inlet of the injector.

8. The system as recited in any preceding claim, further comprising a pressure matching orifice in the primary circuit downstream of the inlet of the injector and upstream of a point where the cooling circuit empties into the primary circuit.

9. The system as recited in any preceding claim, wherein loss of electrical power to the separate valve allows the valve spool to position itself at a position determined by mechanical components and to regulate fuel flow as per a scheduling surface.

10. The system as recited in any preceding claim, wherein the injector is a first injector in a plurality of injectors each connected in fluid communication with a single manifold for supplying fuel to each injector in the plurality of injectors including the primary, secondary, and cooling circuits of the first injector.

11. The system as recited in claim 10, wherein the cooling circuit empties into another injector in the plurality of injectors different from the first injector for issuance into a combustor.

12. The system as recited in claim 10 or 11, wherein each injector in the plurality of injectors is as recited in claim 1 including a respective separate valve as recited in claim 1 connected thereto.

13. The system as recited in claim 12, further comprising a controller electrically connected to the separate valves for individual control thereof, or further comprising a controller electrically connected to the separate valves for ganged control thereof.

14. The system as recited in claim 13, wherein the respective separate valve is a proportional valve with intermediate conditions between fully open and fully closed., and optionally wherein each of the injectors in the plurality of fuel injectors includes a mass flow sensor, pressure sensor, temperature sensor, and/or velocity sensor operatively connected to the controller to provide mass flow feedback to the controller.

15. The system as recited in claim 9, wherein either:
the secondary circuit outlets to a spray outlet of the first injector; or
the secondary circuit outlets to a spray outlet of another injector in the plurality of injectors different from the first injector.
